# EUROPEAN PATENT APPLICATION

(11) **EP 4 674 911 A1**
(43) Date of publication of application: **07.01.2026**
(21) Application number: 24764035.2
(22) Date of filing: 01.03.2024
(51) Int. Cl.: C08L 67/04, C08K 5/098, C08L 101/16

(54) **NUCLEATING AGENT FOR POLYLACTIC ACID-BASED RESINS, POLYLACTIC ACID-BASED RESIN COMPOSITION, AND POLYLACTIC ACID-BASED RESIN MOLDED ARTICLE**

(30) Priority: 01.03.2023 JP 2023031030
(71) Applicant: New Japan Chemical Co., Ltd., Kyoto-shi, Kyoto 612-8224 (JP)
(72) Inventor: NISHIKAWA, Riho, Soraku-gun, Kyoto 619-0237 (JP); IWASAKI, Shohei, Soraku-gun, Kyoto 619-0237 (JP); INOUE, Takahiro, Soraku-gun, Kyoto 619-0237 (JP)
(74) Representative: Cabinet Beau de Loménie
(86) International application number: PCT/JP2024/007775
(87) International publication number: WO 2024/181558

(57) **Abstract**

The present invention provides a dispersion-type crystal nucleating agent for a polylactic acid resin which, when used for a polylactic acid resin, can improve the crystallization temperature of a polylactic acid resin composition and the heat resistance of a polylactic acid resin molded article. The present invention also provides a polylactic acid resin composition and a polylactic acid resin molded article each containing the crystal nucleating agent for a polylactic acid resin. Provided is a crystal nucleating agent for a polylactic acid resin, containing a metal salt of an alicyclic dicarboxylic acid, the alicyclic dicarboxylic acid being cyclohexane-1,2-dicarboxylic acid having at least one alkyl substituent directly bound to a cyclohexane ring, the metal salt being a calcium salt, a hydroxy aluminum salt, a disodium salt, or a dilithium salt, stereoisomers of the alkyl substituent on the cyclohexane ring of the alicyclic dicarboxylic acid and an oxycarbonyl group constituting the metal salt including a cis isomer at a molar ratio of 80.0% or more.

## Description

### TECHNICAL FIELD

The present invention relates to crystal nucleating agents for polylactic acid resins, polylactic acid resin compositions, and polylactic acid resin molded articles.

### BACKGROUND ART

Polylactic acid resins are environmentally friendly materials that ultimately decompose into water and carbon dioxide due to moisture and microorganisms in the environment.

Therefore, attempts are being made to put them into practical use as substitutes for petroleum-derived resins in various fields.

However, polylactic acid resins have a slower crystallization rate compared to petroleum-derived resins and take longer to process, such as molding. They thus have a disadvantage of low industrial productivity.

To overcome the issue, methods using crystal nucleating agents have been studied to shorten the crystallization times of polylactic acid resins.

For example, Patent Literature 1 discloses a technique using an amide compound with a specific structure as a crystal nucleating agent for a polylactic acid resin.

For example, Patent Literature 2 discloses a technique using a talc with a specific D50 average particle size as a crystal nucleating agent for a polylactic acid resin.

### CITATION LIST

### PATENT LITERATURE

Patent Literature 1: JP 2011-6654 A
Patent Literature 2: JP 2015-105302 A

### SUMMARY OF INVENTION

### TECHNICAL PROBLEM

The crystal nucleating agent in Patent Literature 1 is a soluble crystal nucleating agent. Therefore, upon kneading with a polylactic acid resin, the kneading temperature needs to be increased to the heat resistance temperature (240°C) of the polylactic acid resin, unfortunately decomposing the polylactic acid resin in some cases.

The crystal nucleating agent (talc) in Patent Literature 2 is insufficient in terms of a crystallization-promoting effect (improvement of crystallization temperature) and heat resistance of a polylactic acid resin molded article to be obtained.

The present invention aims to provide a dispersion-type crystal nucleating agent for a polylactic acid resin which, when used for a polylactic acid resin, can improve the crystallization temperature of a polylactic acid resin composition and the heat resistance of a polylactic acid resin molded article.

The present invention also provides a polylactic acid resin composition and a polylactic acid resin molded article each containing the crystal nucleating agent for a polylactic acid resin.

### SOLUTION TO PROBLEM

As a result of intensive investigation, the present inventors discovered that the use of the following metal salt of an alicyclic dicarboxylic acid as a nucleating agent can improve the crystallization temperature of a polylactic acid resin composition and the heat resistance of a polylactic acid resin molded article. Specifically, in the metal salt of an alicyclic dicarboxylic acid, the alicyclic dicarboxylic acid is cyclohexane-1,2-dicarboxylic acid having at least one alkyl substituent directly bound to a cyclohexane ring, the metal salt is a calcium salt, a hydroxy aluminum salt, a disodium salt, or a dilithium salt, and stereoisomers of the alkyl substituent on the cyclohexane ring of the alicyclic dicarboxylic acid and an oxycarbonyl group constituting the metal salt include a cis isomer at a molar ratio within a predetermined range.

The present inventors further discovered that the metal salt of an alicyclic dicarboxylic acid is a dispersion-type crystal nucleating agent that excels in dispersibility in a polylactic acid resin and, unlike soluble crystal nucleating agents, does not require kneading at the heat resistance temperature of a polylactic acid resin. The metal salt is thus capable of reducing decomposition of the polylactic acid resin. Based on the discoveries, the present inventors completed the present invention.

Specifically, the present invention relates to a crystal nucleating agent for a polylactic acid resin, including a metal salt of an alicyclic dicarboxylic acid, the alicyclic dicarboxylic acid being cyclohexane-1,2-dicarboxylic acid having at least one alkyl substituent directly bound to a cyclohexane ring, the metal salt being a calcium salt, a hydroxy aluminum salt, a disodium salt, or a dilithium salt, stereoisomers of the alkyl substituent on the cyclohexane ring of the alicyclic dicarboxylic acid and an oxycarbonyl group constituting the metal salt including a cis isomer at a molar ratio of 80.0% or more.

In the crystal nucleating agent for a polylactic acid resin of the present invention, the alkyl substituent is preferably a C1-C4 linear or branched alkyl group.

In the crystal nucleating agent for a polylactic acid resin of the present invention, the alkyl substituent is preferably a methyl group or a tert-butyl group.

In the crystal nucleating agent for a polylactic acid resin of the present invention, the alkyl substituent is preferably located at a 3-position or a 4-position of the cyclohexane ring.

In the crystal nucleating agent for a polylactic acid resin of the present invention, the metal salt is preferably a calcium salt or a disodium salt.

In the crystal nucleating agent for a polylactic acid resin of the present invention, the stereoisomers of the alkyl substituent on the cyclohexane ring of the alicyclic dicarboxylic acid and an oxycarbonyl group constituting the metal salt preferably include a cis isomer at a molar ratio of 90.0% or more.

The present invention also relates to a polylactic acid resin composition, containing the crystal nucleating agent for a polylactic acid resin and a polylactic acid resin.

The polylactic acid resin composition of the present invention preferably contains the crystal nucleating agent for a polylactic acid resin in an amount of 0.03 to 10 parts by mass per 100 parts by mass of the polylactic acid resin.

The present invention also relates to a polylactic acid resin molded article including the polylactic acid resin composition.

### ADVANTAGEOUS EFFECTS OF INVENTION

The present invention provides a dispersion-type crystal nucleating agent for a polylactic acid resin which, when used for a polylactic acid resin, can improve the crystallization temperature of a polylactic acid resin composition and the heat resistance of a polylactic acid resin molded article.

The present invention also provides a polylactic acid resin composition and a polylactic acid resin molded article each containing the crystal nucleating agent for a polylactic acid resin.

### DESCRIPTION OF EMBODIMENTS

### <Crystal nucleating agent for a polylactic acid resin>

The crystal nucleating agent for a polylactic acid resin of the present invention includes a metal salt of an alicyclic dicarboxylic acid. The alicyclic dicarboxylic acid is cyclohexane-1,2-dicarboxylic acid having at least one alkyl substituent directly bound to a cyclohexane ring. The metal salt is a calcium salt, a hydroxy aluminum salt, a disodium salt, or a dilithium salt. Stereoisomers of the alkyl substituent on the cyclohexane ring of the alicyclic dicarboxylic acid and an oxycarbonyl group constituting the metal salt include a cis isomer at a molar ratio of 80.0% or more.

### (Metal salt of an alicyclic dicarboxylic acid)

The crystal nucleating agent for a polylactic acid resin of the present invention includes a metal salt of an alicyclic dicarboxylic acid.

The metal salt of an alicyclic dicarboxylic acid is a dispersion-type crystal nucleating agent that excels in dispersibility in a polylactic acid resin. Thus, unlike soluble crystal nucleating agents, the metal salt of an alicyclic dicarboxylic acid does not require kneading at the heat resistance temperature of a polylactic acid resin and is capable of reducing decomposition of the polylactic acid resin.

The alicyclic dicarboxylic acid is cyclohexane-1,2-dicarboxylic acid having at least one alkyl substituent directly bound to a cyclohexane ring.

The alkyl substituent is preferably a C1-C4 linear or branched alkyl group.

Specific examples of the alkyl substituent include a methyl group, an ethyl group, an n-propyl group, an isopropyl group, an n-butyl group, an isobutyl group, a sec-butyl group, and a tert-butyl group.

To more suitably improve the crystallization temperature of a polylactic acid resin composition and the heat resistance of a polylactic acid resin molded article, the alkyl substituent is preferably a methyl group or a tert-butyl group, more preferably a methyl group among these.

To more suitably improve the crystallization temperature of a polylactic acid resin composition and the heat resistance of a polylactic acid resin molded article, the alkyl substituent is preferably located at a 3-position or a 4-position of the cyclohexane ring, more preferably at a 4-position of the cyclohexane ring.

The location of the alkyl substituent may be appropriately selected depending on the type of a metal species that forms a metal salt with the alkyl substituent.

The metal salt is a calcium salt, a hydroxy aluminum salt, a disodium salt, or a dilithium salt.

To more suitably improve the crystallization temperature of a polylactic acid resin composition and the heat resistance of a polylactic acid resin molded article, the metal salt is preferably a calcium salt or a disodium salt, more preferably a calcium salt among these.

Specific examples of the metal salt of an alicyclic dicarboxylic acid of the present invention include disodium salts of 3-methylcyclohexane-1,2-dicarboxylic acid, calcium salts of 3-methylcyclohexane-1,2-dicarboxylic acid, hydroxy aluminum salts of 3-methylcyclohexane-1,2-dicarboxylic acid, dilithium salts of 3-methylcyclohexane-1,2-dicarboxylic acid, disodium salts of 3-ethylcyclohexane-1,2-dicarboxylic acid, calcium salts of 3-ethylcyclohexane-1,2-dicarboxylic acid, hydroxy aluminum salts of 3-ethylcyclohexane-1,2-dicarboxylic acid, dilithium salts of 3-ethylcyclohexane-1,2-dicarboxylic acid, disodium salts of 3-n-propylcyclohexane-1,2-dicarboxylic acid, calcium salts of 3-n-propylcyclohexane-1,2-dicarboxylic acid, hydroxy aluminum salts of 3-n-propylcyclohexane-1,2-dicarboxylic acid, dilithium salts of 3-n-propylcyclohexane-1,2-dicarboxylic acid, disodium salts of 3-isopropylcyclohexane-1,2-dicarboxylic acid, calcium salts of 3-isopropylcyclohexane-1,2-dicarboxylic acid, hydroxy aluminum salts of 3-isopropylcyclohexane-1,2-dicarboxylic acid, dilithium salts of 3-isopropylcyclohexane-1,2-dicarboxylic acid, disodium salts of 3-n-butylcyclohexane-1,2-dicarboxylic acid, calcium salts of 3-n-butylcyclohexane-1,2-dicarboxylic acid, hydroxy aluminum salts of 3-n-butylcyclohexane-1,2-dicarboxylic acid, dilithium salts of 3-n-butylcyclohexane-1,2-dicarboxylic acid, disodium salts of 3-tert-butylcyclohexane-1,2-dicarboxylic acid, calcium salts of 3-tert-butylcyclohexane-1,2-dicarboxylic acid, hydroxy aluminum salts of 3-tert-butylcyclohexane-1,2-dicarboxylic acid, dilithium salts of 3-tert-butylcyclohexane-1,2-dicarboxylic acid, disodium salts of 3-isobutylcyclohexane-1,2-dicarboxylic acid, calcium salts of 3-isobutylcyclohexane-1,2-dicarboxylic acid, hydroxy aluminum salts of 3-isobutylcyclohexane-1,2-dicarboxylic acid, dilithium salts of 3-isobutylcyclohexane-1,2-dicarboxylic acid, disodium salts of 4-methylcyclohexane-1,2-dicarboxylic acid, calcium salts of 4-methylcyclohexane-1,2-dicarboxylic acid, hydroxy aluminum salts of 4-methylcyclohexane-1,2-dicarboxylic acid, dilithium salts of 4-methylcyclohexane-1,2-dicarboxylic acid, disodium salts of 4-ethylcyclohexane-1,2-dicarboxylic acid, calcium salts of 4-ethylcyclohexane-1,2-dicarboxylic acid, hydroxy aluminum salts of 4-ethylcyclohexane-1,2-dicarboxylic acid, dilithium salts of 4-ethylcyclohexane-1,2-dicarboxylic acid, disodium salts of 4-n-propylcyclohexane-1,2-dicarboxylic acid, calcium salts of 4-n-propylcyclohexane-1,2-dicarboxylic acid, hydroxy aluminum salts of 4-n-propylcyclohexane-1,2-dicarboxylic acid, dilithium salts of 4-n-propylcyclohexane-1,2-dicarboxylic acid, disodium salts of 4-isopropylcyclohexane-1,2-dicarboxylic acid, calcium salts of 4-isopropylcyclohexane-1,2-dicarboxylic acid, hydroxy aluminum salts of 4-isopropylcyclohexane-1,2-dicarboxylic acid, dilithium salts of 4-isopropylcyclohexane-1,2-dicarboxylic acid, disodium salts of 4-n-butylcyclohexane-1,2-dicarboxylic acid, calcium salts of 4-n-butylcyclohexane-1,2-dicarboxylic acid, hydroxy aluminum salts of 4-n-butylcyclohexane-1,2-dicarboxylic acid, dilithium salts of 4-n-butylcyclohexane-1,2-dicarboxylic acid, disodium salts of 4-tert-butylcyclohexane-1,2-dicarboxylic acid, calcium salts of 4-tert-butylcyclohexane-1,2-dicarboxylic acid, hydroxy aluminum salts of 4-tert-butylcyclohexane-1,2-dicarboxylic acid, dilithium salts of 4-tert-butylcyclohexane-1,2-dicarboxylic acid, disodium salts of 4-isobutylcyclohexane-1,2-dicarboxylic acid, calcium salts of 4-isobutylcyclohexane-1,2-dicarboxylic acid, hydroxy aluminum salts of 4-isobutylcyclohexane-1,2-dicarboxylic acid, and dilithium salts of 4-isobutylcyclohexane-1,2-dicarboxylic acid. Preferred are, for example, disodium salts of 3-methylcyclohexane-1,2-dicarboxylic acid, calcium salts of 4-methylcyclohexane-1,2-dicarboxylic acid, and calcium salts of 4-tert-butylcyclohexane-1,2-dicarboxylic acid.

In the crystal nucleating agent for a polylactic acid resin of the present invention, the molar ratio of a cis isomer in stereoisomers of the alkyl substituent on the cyclohexane ring of the alicyclic dicarboxylic acid and an oxycarbonyl group constituting the metal salt is 80.0% or more.

When the molar ratio of the cis isomer is 80.0% or more, the crystallization temperature of a polylactic acid resin composition and the heat resistance of a polylactic acid resin molded article can be improved.

To more suitably improve the crystallization temperature of a polylactic acid resin composition and the heat resistance of a polylactic acid resin molded article, the molar ratio of the cis isomer in the crystal nucleating agent for a polylactic acid resin of the present invention is preferably 83.0% or more, more preferably 85.0% or more, still more preferably 90.0% or more, further preferably 93.0% or more, particularly preferably 95.0% or more, most preferably 99.0% or more.

In the stereoisomers of the alkyl substituent on the cyclohexane ring of the alicyclic dicarboxylic acid and an oxycarbonyl group constituting the metal salt, the cis isomer means that an alkyl substituent on the cyclohexane ring and two oxycarbonyl groups constituting the metal salt are all directed in the same direction.

In an exemplary method for measuring the molar ratio of the cis isomer, a stereoisomer of the alicyclic dicarboxylic acid or a derivative thereof is analyzed by gas chromatography (GC), then the area ratios of the peaks are calculated by an area percentage method, and the molar ratio of the cis isomer is determined using the expression: [(area ratio of cis isomer)/(area ratio of cis isomer + area ratio of trans isomer)] × 100.

In the metal salt of an alicyclic dicarboxylic acid, the molar ratio of the cis isomer in the stereoisomers does not change before and after the step of reacting the alicyclic dicarboxylic acid or a derivative thereof with a metal oxide, a metal hydroxide, or a metal chloride.

Here, the unchanged molar ratio of the cis isomer in the stereoisomers before and after the step of reacting the alicyclic dicarboxylic acid or a derivative thereof with a metal oxide, a metal hydroxide, or a metal chloride can be confirmed by comparing the molar ratio of the cis isomer in the metal salt of the alicyclic dicarboxylic acid measured by the above-described method and the molar ratio of the cis isomer measured by the same method after converting the salt of the alicyclic dicarboxylic acid back to an acid anhydride thereof.

Compounds corresponding to the respective retention times in the GC can each be identified as the above-described alicyclic dicarboxylic acid or a derivative thereof and as a cis isomer or a trans isomer thereof by nuclear magnetic resonance spectroscopy (NMR) and infrared spectroscopy (IR).

For example, in NMR analysis of 4-methylcyclohexane-1,2-dicarboxylic anhydride, an isomer structure can be determined from a nuclear overhauser effect (NOE) of methine hydrogen of an alkyl group-substituted part of the cyclohexane ring present at or near 1.4 ppm and methine hydrogen of a root part of an acid anhydride present at or near 3.2 ppm in the two-dimensional NMR spectrum obtained. It can be determined that the peak at which NOE is observed is attributed to the cis isomer, and the peak at which NOE is not observed is attributed to the trans isomer.

After the step of reacting the alicyclic dicarboxylic acid or a derivative thereof with a metal oxide, a metal hydroxide, or a metal chloride, IR analysis and induction coupled plasma (ICP) analysis are performed to determine an element-specific spectrum, and the emission intensity thereof is measured to determine whether an intended metal salt of an alicyclic dicarboxylic acid has been obtained.

The GC, NMR, and IR and ICP can be suitably performed under, for example, the conditions described in examples below.

Considering that the crystal nucleating agent for a polylactic acid resin of the present invention is a dispersion-type crystal nucleating agent, the crystal nucleating agent has a larger contact area with a polylactic acid resin when it has a smaller particle size to an extent not impairing the dispersibility due to secondary aggregation in the polylactic acid resin. Even with a smaller amount, such a crystal nucleating agent may be able to exert a higher performance as a crystal nucleating agent.

Therefore, the average particle size determined by laser diffraction particle size distribution measurement is preferably 100 µm or less, more preferably 50 µm or less, still more preferably 20 µm or less, particularly preferably 10 µm or less.

In view of the dispersibility, the average particle size determined by laser diffraction particle size distribution measurement is preferably 0.01 µm or more, more preferably 0.1 µm or more, still more preferably 0.5 µm or more.

### (Method for producing metal salt of alicyclic dicarboxylic acid)

The alicyclic dicarboxylic acid may be easily produced by a method in which an alkyl substituent-containing 4-cyclohexene-1,2-dicarboxylic anhydride or a derivative thereof obtained by, for example, the Diels-Alder method is hydrogenated to prepare an alkyl substituent-containing cyclohexane-1,2-dicarboxylic anhydride or a derivative thereof, and the obtained product is further formed into a metal salt.

A preferred example of the method will be specifically described below.

Step 1: A C5-C8 conjugated diene compound is reacted with maleic anhydride or a derivative thereof to prepare an alkyl substituent-containing 4-cyclohexene-1,2-dicarboxylic anhydride or a derivative thereof.

Step 2: The alkyl substituent-containing 4-cyclohexene-1,2-dicarboxylic anhydride or a derivative thereof obtained in step 1 is hydrogenated to prepare an alkyl substituent-containing cyclohexane-1,2-dicarboxylic anhydride or a derivative thereof.

Step 3: The alkyl-substituted cyclohexane-1,2-dicarboxylic anhydride or a derivative thereof obtained in step 2 is reacted with a metal oxide, a metal hydroxide, or a metal chloride to prepare a metal salt of alkyl substituent-containing cyclohexane-1,2-dicarboxylic acid of the present invention.

The method for producing the metal salt of an alicyclic dicarboxylic acid preferably includes steps 1 to 3 above.

Specifically, the method includes step 1 of reacting a C5-C8 conjugated diene compound with maleic anhydride or a derivative thereof to prepare an alkyl substituent-containing 4-cyclohexene-1,2-dicarboxylic anhydride or a derivative thereof; step 2 of hydrogenating the alkyl substituent-containing 4-cyclohexene-1,2-dicarboxylic anhydride or a derivative thereof obtained in step 1 to prepare an alkyl substituent-containing cyclohexane-1,2-dicarboxylic anhydride or a derivative thereof; and step 3 of reacting the alkyl substituent-containing cyclohexane-1,2-dicarboxylic anhydride or a derivative thereof obtained in step 2 with a metal oxide, a metal hydroxide, or a metal chloride to prepare a metal salt of an alkyl substituent-containing cyclohexane-1,2-dicarboxylic acid.

Examples of the C5-C8 conjugated diene compound include 2-methyl-1,3-butadiene (isoprene), 2-ethyl-1,3-butadiene, 2-propyl-1,3-butadiene, 2-butyl-1,3-butadiene, 2-tert-butyl-1,3-butadiene, 2,3-dimethyl-1,3-butadiene, 1,3-pentadiene (piperylene), 1,3-hexadiene, 2,4-hexadiene, 2,4-heptadiene, 2,4-octadiene, 3-methyl-1,3-pentadiene, and 2,5-dimethyl-2,4-hexadiene..

Examples of the metal oxide, metal hydroxide, or metal chloride include oxides, hydroxides, or chlorides of a metal species such as calcium, aluminum, sodium, and lithium.

The method for step 1 of reacting a C5-C8 conjugated diene compound with maleic anhydride or a derivative thereof, the method for step 2 of hydrogenating an alkyl substituent-containing 4-cyclohexene-1,2-dicarboxylic anhydride or a derivative thereof, and the method for step 3 of preparing a metal salt of an alkyl substituent-containing cyclohexane-1,2-dicarboxylic acid are not particularly limited, and known methods can be appropriately selected and used.

### <Polylactic acid resin composition>

The polylactic acid resin composition of the present invention contains the crystal nucleating agent for a polylactic acid resin of the present invention and a polylactic acid resin.

To suitably improve the crystallization temperature of the polylactic acid resin composition of the present invention, the amount of the crystal nucleating agent for a polylactic acid resin per 100 parts by mass of the polylactic acid resin is preferably 0.03 parts by mass or more, more preferably 0.05 parts by mass or more, still more preferably 0.1 parts by mass or more.

To suitably improve the heat resistance of a polylactic acid resin molded article, the amount of the crystal nucleating agent for a polylactic acid resin per 100 parts by mass of the polylactic acid resin in the polylactic acid resin composition of the present invention is preferably 0.03 parts by mass or more, more preferably 0.05 parts by mass or more, still more preferably 0.1 parts by mass or more, particularly preferably 0.2 parts by mass or more.

When the amount of the crystal nucleating agent for a polylactic acid resin per 100 parts by mass of the polylactic acid resin is 0.2 parts by mass or more, the heat resistance of a polylactic acid resin molded article can be especially suitably improved.

Moreover, the amount of the crystal nucleating agent for a polylactic acid resin per 100 parts by mass of the polylactic acid resin in the polylactic acid resin composition of the present invention is preferably 10 parts by mass or less.

When the amount of the crystal nucleating agent for a polylactic acid resin per 100 parts by mass of the polylactic acid resin is 10 parts by mass or less, the presence of white spots, which are described later, in a polylactic acid resin molded article can be reduced.

### (Polylactic acid resin)

The polylactic acid resin includes lactic acid units with various optical purities. For example, the polylactic acid resin includes structural units such as a structural unit consisting of an L-lactic acid residue (L-lactic acid unit) and a structural unit consisting of a D-lactic acid residue (D-lactic acid unit). The polylactic acid resin in the present invention may be a polylactic acid resin produced by a known method or a commercial product.

Specific examples of the polylactic acid resin include a polylactic acid resin consisting mainly of an L-lactic acid unit, a polylactic acid resin consisting mainly of a D-lactic acid unit, a mixture (stereo complex) of a polylactic acid resin consisting mainly of an L-lactic acid unit and a polylactic acid resin consisting mainly of a D-lactic acid unit, and a polylactic acid resin obtained by random polymerization or block polymerization of an L-lactic acid unit and a D-lactic acid unit.

Of these, the polylactic acid resin preferably includes a polylactic acid resin consisting mainly of an L-lactic acid unit and/or a polylactic acid resin consisting mainly of a D-lactic acid unit, more preferably includes a polylactic acid resin consisting mainly of an L-lactic acid unit or a polylactic acid resin consisting mainly of a D-lactic acid unit.

The phrase "consisting mainly of" means that the percentage of any one of the lactic acid units relative to all the structural units in the polylactic acid resin is preferably 80 to 100 mol%, more preferably 90 to 100 mol%, still more preferably 95 to 100 mol%.

When the percentage is within the above range, the polylactic acid resin has a high melting point, so that a polylactic acid resin molded article with high heat resistance and good mechanical properties tends to be obtained. Moreover, the crystallization time of the polylactic acid resin molded article can further be shortened.

The phrase "all the structural units in the polylactic acid resin" in the case of the polylactic acid resin consisting only of structural units derived from lactic acids (lactic acid residues) refers to the total units of L-lactic acid units and D-lactic acid units, while the phrase in the case of the polylactic acid resin further including structural units derived from hydroxycarboxylic acids, which are described later, other than lactic acids refers to the total units of structural units derived from lactic acids and structural units derived from the hydroxycarboxylic acids.

The polylactic acid resin can be produced by a known method from a starting raw material such as a material derived only from an L-lactic acid, a D-lactic acid, a DL-lactic acid, an L-lactide, a D-lactide, or a meso-lactide or a material derived from a mixture of these, through direct dehydration condensation of the lactic acid or ringopening polymerization of the lactide.

In view of the availability of the starting raw material, the starting material is not limited to plant-derived raw materials and may include a starting material (monomer) that is a lactic acid derivative, such as an L-methyl lactate, a D-methyl lactate, an L-ethyl lactate, or a D-ethyl lactate, and a starting material produced by microorganisms.

The polylactic acid resin may include a different structural unit other than lactic acid residues. The percentage of the different structural unit relative to all the structural units in the polylactic acid resin is preferably 20 mol% or less, more preferably 10 mol% or less, still more preferably 5 mol% or less.

Examples of the different structural unit include aliphatic dicarboxylic acids such as succinic acid, adipic acid, sebacic acid, and azelaic acid; aliphatic glycols such as ethylene glycol, propylene glycol, and 1,4-butanediol; and hydroxycarboxylic acids such as glycolic acid, β-hydroxybutyric acid, hydroxy pivalic acid, and hydroxy valeric acid.

The molecular weight of the polylactic acid resin is not limited. Still, the number average molecular weight is preferably within the range of 5,000 to 400,000, more preferably within the range of 10,000 to 200,000.

When the molecular weight of the polylactic acid resin is within the range, a polylactic acid resin molded article to be obtained is superior in terms of mechanical properties, hydrolytic stability, and moldability.

Herein, the term "number average molecular weight" refers to a value measured by gel permeation chromatography (GPC) in terms of polystyrene.

### (Others)

The polylactic acid resin composition of the present invention may optionally contain an additive.

Examples of the additive include hydrolysis resistance improvers (end-capping agents), lubricants, plasticizers, pigments, impact resistance improvers, processing aids, reinforcing agents, colorants, flame retardants, weatherability improvers, UV absorbers, antioxidants, fungicides, antibacterial agents, light stabilizers, antistatic agents, silicone oil, anti-blocking agents, mold releasers, foaming agents, fragrances, fibers such as glass fibers and polyester fibers, fillers such as wood flour, and coupling agents.

The amount of such an additive to be optionally added is appropriately determined depending on the type and the purpose of use. For example, the amount per 100 parts by mass of the polylactic acid resin is preferably 0.01 to 5 parts by mass, more preferably 0.05 to 4 parts by mass, still more preferably 0.1 to 3 parts by mass.

### (Crystallization temperature)

The polylactic acid resin composition of the present invention preferably has a crystallization temperature of 126°C or higher, more preferably 129°C or higher, still more preferably 132°C or higher.

When the crystallization temperature is within the above range, the crystallization temperature of the polylactic acid resin composition can be considered as being improved by the crystal nucleating agent for a polylactic acid resin.

Here, the crystallization temperature is determined by preparing a polylactic acid resin composition by the method described below, subjecting the polylactic acid resin composition to differential scanning calorimetry under the conditions described below, and determining the temperature at the peak top detected as a crystallization temperature.

### <Preparation of polylactic acid resin composition>

A predetermined amount of a crystal nucleating agent for a polylactic acid resin is added per 100 parts by mass of a polylactic acid resin (TE-2000 manufactured by Unitika Ltd. or 4032D manufactured by NatureWorks). They were dry-blended using a Henschel mixer to obtain a mixture.

The mixture is melt-kneaded at a resin temperature of 185°C using a twinscrew extruder (nozzle die inner diameter: φ3 mm) and then extruded in the form of strand into water (25°C) for cooling. The cooled strand is cut with a pelletizer to prepare a polylactic acid resin composition.

The crystallization temperature is measured under the following measurement conditions.

### <Measurement conditions>

Measurement apparatus: trade name: DSC8500 (manufactured by PerkinElmer Inc.)

The measurement is performed at a start temperature of the measurement of 200°C, an end temperature of the measurement of 50°C, and a cooling rate of 10°C/min in accordance with JIS K 7121:2012 "Testing methods for Transition Temperatures of Plastics" using about 6 mg of a sample obtained by drying the polylactic acid resin composition at 80°C and 0.1 kPa for 12 hours or longer in a vacuum dryer.

### <Polylactic acid resin molded article>

The polylactic acid resin molded article of the present invention is formed from the polylactic acid resin composition of the present invention.

The polylactic acid resin molded article of the present invention can be produced by, for example, the following method.

The polylactic acid resin molded article of the present invention can be produced through molding by a common molding method.

The molding method may be any method that can provide the effect of the present invention, including any conventionally known molding method such as injection molding, extrusion molding, blow molding, pressure molding, rotational molding, or film molding.

### (Heat resistance)

The polylactic acid resin molded article of the present invention has excellent heat resistance.

For example, the heat resistance can be evaluated as follows. A polylactic acid resin molded article is prepared under the conditions described below and then subjected to dynamic viscoelasticity measurement under the conditions described below to measure a storage modulus E' at 80°C. The heat resistance is evaluated based on the measured value.

The storage modulus E' at 80°C is preferably 100 MPa or more, more preferably 150 MPa or more, still more preferably 200 MPa or more, further preferably 250 MPa or more, particularly preferably 300 MPa or more, particularly more preferably 350 MPa or more, most preferably 400 MPa or more.

### <Method for measuring storage modulus of polylactic acid resin molded article>

A polylactic acid resin composition is prepared as in the method for measuring the crystallization temperature described above.

The polylactic acid resin composition is dried in a vacuum dryer at 110°C and 0.1 kPa for 12 hours or longer. Afterward, the dried product is melted with a press machine at a resin temperature of 200°C and 10 MPa for two minutes.

Subsequently, the molten product is annealed at 130°C for one minute and then rapidly cooled at 25°C to prepare a polylactic acid resin molded article.

The storage modulus E' at 80°C is measured under the following measurement conditions.

### <Measurement conditions>

Measurement apparatus: trade name Rheogel-E4000 (manufactured by UBM)
Measurement mode: tensile mode, frequency: 10 Hz, starting temperature of measurement: 30°C, heating rate: 2°C/min

### (Appearance)

The polylactic acid resin molded article of the present invention preferably has great appearance.

A polylactic acid resin molded article is prepared as in the measurement of the heat resistance. The polylactic acid resin molded article is visually observed to count the number of white spots.

The polylactic acid resin molded article with no (zero) white spots can be determined as having great appearance.

The following are disclosed herein.

Disclosure (1): A crystal nucleating agent for a polylactic acid resin, including a metal salt of an alicyclic dicarboxylic acid, the alicyclic dicarboxylic acid being cyclohexane-1,2-dicarboxylic acid having at least one alkyl substituent directly bound to a cyclohexane ring, the metal salt being a calcium salt, a hydroxy aluminum salt, a disodium salt, or a dilithium salt, stereoisomers of the alkyl substituent on the cyclohexane ring of the alicyclic dicarboxylic acid and an oxycarbonyl group constituting the metal salt including a cis isomer at a molar ratio of 80.0% or more.

Disclosure (2): The crystal nucleating agent for a polylactic acid resin according to Disclosure (1), wherein the alkyl substituent is a C1-C4 linear or branched alkyl group.

Disclosure (3). The crystal nucleating agent for a polylactic acid resin according to Disclosure (2), wherein the alkyl substituent is a methyl group or a tert-butyl group.

Disclosure (4). The crystal nucleating agent for a polylactic acid resin according to any one of Disclosures (1) to (3), wherein the alkyl substituent is located at a 3-position or a 4-position of the cyclohexane ring.

Disclosure (5). The crystal nucleating agent for a polylactic acid resin according to any one of Disclosures (1) to (4), wherein the metal salt is a calcium salt or a disodium salt.

Disclosure (6). The crystal nucleating agent for a polylactic acid resin according to any one of Disclosures (1) to (5), wherein the stereoisomers of the alkyl substituent on the cyclohexane ring of the alicyclic dicarboxylic acid and an oxycarbonyl group constituting the metal salt include a cis isomer at a molar ratio of 90.0% or more.

Disclosure (7). A polylactic acid resin composition, containing the crystal nucleating agent for a polylactic acid resin according to any one of Disclosures (1) to (6), and a polylactic acid resin.

Disclosure (8). The polylactic acid resin composition according to Disclosure (7), containing the crystal nucleating agent for a polylactic acid resin in an amount of 0.03 to 10 parts by mass per 100 parts by mass of the polylactic acid resin.

Disclosure (9). A polylactic acid resin molded article including the polylactic acid resin composition according to Disclosure (7) or (8).

### EXAMPLES

The present invention will be described in more detail with reference to, but not limited to, the following examples. The properties in the examples are measured by the methods described below. Compounds which were used but not specifically described are reagent-grade compounds.

### [Compounds used]

- maleic anhydride (manufactured by Tokyo Chemical Industry Co., Ltd.)
- isoprene (manufactured by Tokyo Chemical Industry Co., Ltd.)
- piperylene (manufactured by Tokyo Chemical Industry Co., Ltd.)
- 1-cyclohexene-1,2-dicarboxylic anhydride (manufactured by Tokyo Chemical Industry Co., Ltd.)
- palladium catalyst (manufactured by Tokyo Chemical Industry Co., Ltd.)
- polylactic acid resin: "TE-2000" (manufactured by Unitika Ltd.)
- polylactic acid resin: "4032D" (manufactured by NatureWorks)
- talc "MICRO ACE P-3" (manufactured by Nippon Talc Co., Ltd.)
- Crystal nucleating agent: N,N',N"-tricyclohexyltrimesamide (manufactured by New Japan Chemical Co., Ltd.)

### [Analysis method for metal salt of alicyclic dicarboxylic acid]

### (1) Gas chromatography analysis (GC)

The molar ratio of a cis isomer in stereoisomers of a 3- or 4-position alkyl substituent on a cyclohexane ring of the alicyclic dicarboxylic acid or a derivative thereof obtained in the examples and the like and an oxycarbonyl group constituting the metal salt was measured by GC.

Thereafter, the area ratios of the peaks were calculated by an area percentage method, and the molar ratio of a cis isomer in stereoisomers of the 3- or 4-position alkyl substituent on the cyclohexane ring in a metal salt of the alicyclic dicarboxylic acid and an oxycarbonyl group constituting the metal salt was determined using the expression: [(area ratio of cis isomer)/(area ratio of cis isomer + area ratio of trans isomer)] × 100.

Comparison of the above molar ratio with the result of the similar measurement performed after converting the obtained metal salt of the alicyclic dicarboxylic acid back to an acid anhydride thereof revealed that the molar ratio of the cis isomer in the stereoisomers did not change before and after the step of reacting the alicyclic dicarboxylic acid or a derivative thereof with a metal oxide, a metal hydroxide, or a metal chloride.

Compounds corresponding to the respective retention times were each identified as the alicyclic dicarboxylic acid or a derivative thereof and a cis isomer or a trans isomer thereof by the following NMR and IR.

### <GC measurement conditions>

Type of equipment: Gas chromatograph GC-2010 (manufactured by Shimadzu Corporation)
Detector: FID, 280°C
Column: DB-1701 (30 m × 0.25 mmϕ × 0.25 µm)
Column temperature: 145°C
Injection temperature: 280°C
Carrier gas: helium (line speed: 30 cm/sec)
Injection amount: 0.1 µl (sprit ratio: 1/15)

### (2) Nuclear magnetic resonance spectroscopy (NMR)

The structures of the isomers in the GC were determined by NMR. Measurement conditions for the NMR are described below.
NMR analysis apparatus: trade name "DRX-500" manufactured by Bruker
Solvent: heavy dimethylsulfoxide (DMSO-d6)
Internal standard: tetramethylsilane (TMS)
Sample tube: 5 mm
¹H-NMR ... resonance frequency: 500.1 MHz, cumulative number: 4
¹³C-NMR ... resonance frequency: 125.8 MHz, cumulative number: 23

The measurement sample was prepared by diluting 30 mg of a sample with 0.8 ml of a solvent.

### (3) Infrared spectroscopy (IR)

The structures of the isomers in the GC and the structures of the metal salts of alicyclic dicarboxylic acids obtained in the examples and the like were determined by IR. Measurement conditions for the IR are described below.
FT-IR apparatus: trade name "Spectrum One" manufactured by PerkinElmer
Measurement method: ATR method
Cumulative number: 3
Resolution: 4.00 cm⁻¹

The measurement was performed with the sample pressed onto a cell of the apparatus.

### (4) Induction coupled plasma analysis (ICP)

The structures of the metal salts of the alicyclic dicarboxylic acids obtained in the examples and the like were determined by ICP. Measurement conditions for the ICP are described below.
ICP apparatus: trade name "iCAP 6500Duo" manufactured by Thermo Fisher SCIENTIFIC
Spray chamber: cyclone sprayer
Plasma conditions: plasma/aid/carrier = 15/1.0/0.6
Plasma observation direction: three times in axial direction

A sample pretreated by a microwave decomposition method was used as a measurement sample.
Microwave apparatus: trade name "Multiwave PRO" manufactured by Anton Paar
Decomposition conditions: About 0.05 g of the sample was decomposed with 6 mL of nitric acid (special grade) and then diluted with distilled water.

### [Method for evaluating polylactic acid resin composition]

### (5) Crystallization temperature

The crystallization temperatures of the polylactic acid resin compositions obtained in the examples and the like were measured with a differential scanning calorimeter (DSC8500, manufactured by PerkinElmer Inc.) at a start temperature of the measurement of 200°C, an end temperature of the measurement of 50°C, and a cooling rate of 10°C/min (in accordance with JIS K 7121:2012 "Testing methods for Transition Temperatures of Plastics"). The temperature at the peak top detected was determined as the crystallization temperature (°C) and evaluated based on the criteria below.

The crystallization temperature was measured using about 6 mg of a sample that had been dried at 80°C and 0.1 kPa for 12 hours or longer in a vacuum dryer.

### (Evaluation criteria)

∘∘: Crystallization temperature is 129°C or higher.
∘: Crystallization temperature is 126°C or higher and lower than 129°C.
Δ: Crystallization temperature is 123°C or higher and lower than 126°C.
×: Crystallization temperature is not detected or lower than 123°C.

### [Method for evaluating polylactic acid resin molded article]

### (6) Heat resistance

The storage moduli E' at 80°C of the polylactic acid resin molded articles obtained in the examples and the like were measured with a measurement apparatus (Rheogel-E4000 manufactured by UBM) under the conditions including measurement mode: tensile mode, frequency: 10 Hz, starting temperature of measurement: 30°C, and heating rate: 2°C/min. The measured storage moduli E' were evaluated based on the following criteria.

### (Evaluation criteria)

∘∘: Storage modulus E' at 80°C is 200 MPa or more.
∘: Storage modulus E' at 80°C is 100 MPa or more and less than 200 MPa.
Δ: Storage modulus E' at 80°C is 10 MPa or more and less than 100 MPa.
×: Storage modulus E' at 80°C is less than 10 MPa.

### (7) Appearance

The polylactic acid resin molded articles obtained in the examples and the like were visually observed to count the number of white spots, and they were evaluated based on the following criteria.
∘: No white spot was observed (zero white spot).
×: White sports were observed (one or more white spots).

### (Example 1)

### <Preparation of crystal nucleating agent for polylactic acid resin>

A pressure-resistant autoclave was charged with 196 g of maleic anhydride, 500 ppm of p-tert-butylcatechol as a radical polymerization inhibitor, and 500 ppm of diphenyl sulfide as a polymerization inhibition improver, and the contents were melted under heating at 50°C to 55°C. The inside of the system was then replaced under stirring with nitrogen gas containing 0.06 vol% oxygen. Thereafter, 140 g of isoprene (conjugated diene compound) was continuously added at 50°C to 55°C over six hours, and the mixture was subjected to Diels-Alder reaction at 70°C for one hour. After completion of the reaction, the reaction product was distilled at 85°C under normal pressure and then under reduced pressure to remove volatile components. Thus, 332 g of 4-methyl-4-cyclohexene-1,2-dicarboxylic anhydride was prepared.

Subsequently, a pressure-resistant autoclave was charged with 200 g of the 4-methyl-4-cyclohexene-1,2-dicarboxylic anhydride obtained above and 0.4 g of a palladium catalyst (palladium 5%/alumina 95%), and the contents were subjected to hydrogenation reaction at a hydrogen pressure of 1 MPa and a temperature of 110°C under stirring for five hours.

After completion of the reaction, the reaction product was separated from the catalyst by a centrifugation method to prepare 197 g of 4-methylcyclohexane-1,2-dicarboxylic anhydride. GC and NMR revealed that the molar ratio of the cis isomer of the obtained 4-methylcyclohexane-1,2-dicarboxylic anhydride was 85%.

Next, the 4-methylcyclohexane-1,2-dicarboxylic anhydride was distilled under reduced pressure at 120°C to separate a low-boiling fraction from residual fractions. Two-dimensional NMR spectroscopy revealed that the obtained low-boiling fraction was 4-methylcyclohexane-1,2-dicarboxylic anhydride with a molar ratio of the cis isomer of 99.5%.

For methine hydrogen of an alkyl group-substituted part of the cyclohexane ring present at or near 1.4 ppm and methine hydrogen of a root part of an acid anhydride present at or near 3.2 ppm in the two-dimensional NMR spectrum obtained, it was determined that the peak at which NOE was observed was attributed to the cis isomer, and the peak at which NOE was not observed was attributed to the trans isomer.

Next, a four-neck flask equipped with a stirrer and a thermometer was charged with 500 ml of water and 61 g (0.81 mol) of calcium hydroxide, and the contents were stirred at room temperature to form a slurry. To the obtained slurry was added 136 g (0.81 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 168 g of a 4-methylcyclohexane-1,2-dicarboxylic acid calcium salt (compound 1).

IR and ICP revealed that the obtained compound 1 (calcium salt of 4-methylcyclohexane-1,2-dicarboxylic acid with a molar ratio of the cis isomer of 99.5%) had the structure of the target compound.

### <Preparation of polylactic acid resin composition>

An amount of 0.03 parts by mass of the crystal nucleating agent for a polylactic acid resin (compound 1) was added per 100 parts by mass of a polylactic acid resin (TE-2000, manufactured by Unitika Ltd.). They were dry-blended using a Henschel mixer to obtain a mixture.

The mixture was melt-kneaded at a resin temperature of 185°C using a twinscrew extruder (nozzle die inner diameter: φ3 mm) and then extruded in the form of strand into water (25°C) for cooling. The cooled strand was cut with a pelletizer to prepare a polylactic acid resin composition.

The crystallization temperature of the polylactic acid resin composition was evaluated by the above-described method.

### <Preparation of polylactic acid resin molded article>

The polylactic acid resin composition was dried in a vacuum dryer at 110°C and 0.1 kPa for 12 hours or longer. Afterward, the dried product was melted with a press machine at a resin temperature of 200°C and 10 MPa for two minutes.

Subsequently, the molten product was annealed at 130°C for one minute and then rapidly cooled in a mold maintained at a temperature of 25°C to prepare a polylactic acid resin molded article.

The heat resistance and the appearance of the polylactic acid resin molded article were evaluated by the above-described methods.

### (Example 2 to 10)

### <Preparation of crystal nucleating agent for polylactic acid resin>

A compound 1 (calcium salt of 4-methylcyclohexane-1,2-dicarboxylic acid with a molar ratio of the cis isomer of 99.5%) was prepared as in Example 1.

### <Preparation of polylactic acid resin composition>

A polylactic acid resin composition was prepared as in Example 1, except that the amount of the crystal nucleating agent for a polylactic acid resin (compound 1) added per 100 parts by mass of the polylactic acid resin (TE-2000, manufactured by Unitika Ltd.) was changed to the amount indicated in Table 1.

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Example 11)

### <Preparation of crystal nucleating agent for polylactic acid resin>

A pressure-resistant autoclave was charged with 200 g of the 4-methyl-4-cyclohexene-1,2-dicarboxylic anhydride obtained in Example 1 and 0.4 g of a palladium catalyst (palladium 5%/alumina 95%), and the contents were subjected to hydrogenation reaction at a hydrogen pressure of 1 MPa and a temperature of 110°C under stirring for five hours.

The reaction product was subjected to thermal isomerization at 170°C to obtain 197 g of 4-methylcyclohexane-1,2-dicarboxylic anhydride. GC and NMR revealed that the molar ratio of the cis isomer of the obtained 4-methylcyclohexane-1,2-dicarboxylic anhydride was 50.0%.

Next, the 4-methylcyclohexane-1,2-dicarboxylic anhydride with a molar ratio of the cis isomer of 50.0% was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 95.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 2). IR and ICP revealed that the obtained compound 2 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 2) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Example 12)

### <Preparation of crystal nucleating agent for polylactic acid resin>

The 4-methylcyclohexane-1,2-dicarboxylic anhydride with a molar ratio of the cis isomer of 50.0% obtained in Example 11 was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 93.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 3). IR and ICP revealed that the obtained compound 3 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 3) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Example 13)

### <Preparation of crystal nucleating agent for polylactic acid resin>

The 4-methylcyclohexane-1,2-dicarboxylic anhydride with a molar ratio of the cis isomer of 50.0% obtained in Example 11 was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 90.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 4). IR and ICP revealed that the obtained compound 4 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 4) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Example 14)

### <Preparation of crystal nucleating agent for polylactic acid resin>

The 4-methylcyclohexane-1,2-dicarboxylic anhydride with a molar ratio of the cis isomer of 50.% obtained in Example 11 was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 83.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 5). IR and ICP revealed that the obtained compound 5 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 5) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Example 15)

### <Preparation of polylactic acid resin composition>

A polylactic acid resin composition was prepared as in Example 1, except that 0.3 parts by mass of the crystal nucleating agent for a polylactic acid resin (compound 1) was added per 100 parts by mass of the polylactic acid resin ("4032D" manufactured by NatureWorks).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 1)

### <Preparation of polylactic acid resin composition>

A polylactic acid resin composition was prepared as in Example 1, except that no crystal nucleating agent for a polylactic acid resin was added to the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 2)

### <Preparation of crystal nucleating agent for polylactic acid resin>

The 4-methylcyclohexane-1,2-dicarboxylic anhydride with a molar ratio of the cis isomer of 50.0% obtained in Example 11 was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 75.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 6). IR and ICP revealed that the obtained compound 6 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 6) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 3)

### <Preparation of crystal nucleating agent for polylactic acid resin>

The 4-methylcyclohexane-1,2-dicarboxylic anhydride with a molar ratio of the cis isomer of 50.0% obtained in Example 11 was mixed with the 4-methylcyclohexane-1,2-dicarboxylic anhydride with a molar ratio of the cis isomer of 99.5% obtained in Example 1. Two-dimensional NMR spectroscopy revealed that the obtained mixture was 4-methylcyclohexane-1,2-dicarboxylic anhydride with a molar ratio of the cis isomer of 70.0%.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 7). IR and ICP revealed that the obtained compound 7 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 7) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 4)

### <Preparation of crystal nucleating agent for polylactic acid resin>

A 4-methylcyclohexane-1,2-dicarboxylic anhydride with a molar ratio of the cis isomer of 50.0% was prepared as in Example 11.

Next, a four-neck flask equipped with a stirrer and a thermometer was charged with 50 ml of water and 6.1 g (0.08 mol) of calcium hydroxide, and the contents were stirred at room temperature to form a slurry. To the obtained slurry was added 13.6 g (0.08 mol) of the 4-methylcyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 15.9 g of a 4-methylcyclohexane-1,2-dicarboxylic acid calcium salt (compound 8). IR and ICP revealed that the obtained compound 8 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 8) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 5)

### <Preparation of polylactic acid resin composition>

A polylactic acid resin composition was prepared as in Example 1, except that 1 part by mass of a crystal nucleating agent (talc, MICRO ACE P-3, manufactured by Nippon Talc Co., Ltd.) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 6)

### <Preparation of polylactic acid resin composition>

A polylactic acid resin composition was prepared as in Example 1, except that 0.2 parts by mass of N,N',N"-tricyclohexyltrimesamide was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 7)

### <Preparation of polylactic acid resin composition>

A polylactic acid resin composition was prepared as in Example 1, except that 0.03 parts by mass of N,N',N"-tricyclohexyltrimesamide was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 8)

### <Preparation of crystal nucleating agent for polylactic acid resin>

A pressure-resistant autoclave was charged with 196 g of maleic anhydride, 500 ppm of p-tert-butylcatechol as a radical polymerization inhibitor, and 500 ppm of diphenyl sulfide as a polymerization inhibition improver, and the contents were melted under heating at 50°C to 55°C. The inside of the system was then replaced under stirring with nitrogen gas containing 0.06 vol% oxygen. Thereafter, 108 g of butadiene (conjugated diene compound) was continuously added at 70°C to 75°C over six hours, and the mixture was subjected to Diels-Alder reaction at 70°C for one hour. After completion of the reaction, the reaction product was distilled at 85°C under normal pressure and then under reduced pressure to remove volatile components. Thus, 304 g of 4-cyclohexene-1,2-dicarboxylic anhydride was prepared.

Subsequently, a pressure-resistant autoclave was charged with 200 g of the 4-cyclohexene-1,2-dicarboxylic anhydride obtained above and 0.4 g of a palladium catalyst (palladium 5%/alumina 95%), and the contents were subjected to hydrogenation reaction at a hydrogen pressure of 1 MPa and a temperature of 110°C under stirring for five hours.

After completion of the reaction, the reaction product was separated from the catalyst by a centrifugation method to prepare 197 g of cyclohexane-1,2-dicarboxylic anhydride.

Next, a four-neck flask equipped with a stirrer and a thermometer was charged with 500 ml of water and 61 g (0.81 mol) of calcium hydroxide, and the contents were stirred at room temperature to form a slurry. To the obtained slurry was added 125 g (0.81 mol) of the cyclohexane-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 120 g of a cyclohexane-1,2-dicarboxylic acid calcium salt (compound 9). IR and ICP revealed that the obtained compound 9 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 9) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 9)

### <Preparation of crystal nucleating agent for polylactic acid resin>

A four-neck flask equipped with a stirrer and a thermometer was charged with 500 ml of water and 61 g (0.81 mol) of calcium hydroxide, and the contents were stirred at room temperature to form a slurry. To the obtained slurry was added 123 g (0.81 mol) of the 4-cyclohexene-1,2-dicarboxylic anhydride obtained in Comparative Example 8. The mixture was heated to 50°C, stirred for five hours, and reacted. After completion of the reaction, the slurry was separated by filtration. The residue was washed with a sufficient amount of water, and then dried overnight under reduced pressure at 140°C to prepare 156 g of a 4-cyclohexene-1,2-dicarboxylic acid calcium salt (compound 10). IR and ICP revealed that the obtained compound 10 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 10) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 10)

### <Preparation of crystal nucleating agent for polylactic acid resin>

A four-neck flask equipped with a stirrer and a thermometer was charged with 500 ml of water and 61 g (0.81 mol) of calcium hydroxide, and the contents were stirred at room temperature to form a slurry. To the obtained slurry was added 134 g (0.81 mol) of the 4-methyl-4-cyclohexene-1,2-dicarboxylic anhydride. The mixture was heated to 50°C, stirred for five hours, and reacted. After completion of the reaction, the slurry was separated by filtration. The residue was washed with a sufficient amount of water, and then dried overnight under reduced pressure at 140°C to prepare 166 g of a 4-methyl-4cyclohexene-1,2-dicarboxylic acid calcium salt (compound 11). IR and ICP revealed that the obtained compound 11 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 11) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 11)

### <Preparation of crystal nucleating agent for polylactic acid resin>

A four-neck flask equipped with a stirrer and a thermometer was charged with 500 ml of water and 61 g (0.81 mol) of calcium hydroxide, and the contents were stirred at room temperature to form a slurry. To the obtained slurry was added 123 g (0.81 mol) of the 1-cyclohexene-1,2-dicarboxylic anhydride. The mixture was heated to 50°C, stirred for five hours, and reacted. After completion of the reaction, the slurry was separated by filtration. The residue was washed with a sufficient amount of water, and then dried overnight under reduced pressure at 140°C to prepare 156 g of a 1-cyclohexene-1,2-dicarboxylic acid calcium salt (compound 12). IR and ICP revealed that the obtained compound 12 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 12) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

### (Comparative Example 12)

### <Preparation of crystal nucleating agent for polylactic acid resin>

A pressure-resistant autoclave was charged with 196 g of maleic anhydride, 500 ppm of p-tert-butylcatechol as a radical polymerization inhibitor, and 500 ppm of diphenyl sulfide as a polymerization inhibition improver, and the contents were melted under heating at 50°C to 55°C. The inside of the system was then replaced under stirring with nitrogen gas containing 0.06 vol% oxygen. Thereafter, 140 g of piperylene (conjugated diene compound) was continuously added at 50°C to 55°C over six hours, and the mixture was subjected to Diels-Alder reaction at 70°C for one hour. After completion of the reaction, the reaction product was distilled at 85°C under normal pressure and then under reduced pressure to remove volatile components. Thus, 332 g of 3-methyl-4-cyclohexene-1,2-dicarboxylic anhydride was prepared.

Next, a four-neck flask equipped with a stirrer and a thermometer was charged with 500 ml of water and 61 g (0.81 mol) of calcium hydroxide, and the contents were stirred at room temperature to form a slurry. To the obtained slurry was added 134 g (0.81 mol) of the 3-methyl-4-cyclohexene-1,2-dicarboxylic anhydride obtained above. The mixture was heated to 50°C, stirred for five hours, and reacted. After completion of the reaction, the slurry was separated by filtration. The residue was washed with a sufficient amount of water, and then dried overnight under reduced pressure at 140°C to prepare 166 g of a 3-methyl-4-cyclohexene-1,2-dicarboxylic acid calcium salt (compound 13). IR and ICP revealed that the obtained compound 13 had the structure of the target compound.

### <Preparation of polylactic acid resin composition>

A polylactic acid resin composition was prepared as in Example 1, except that 0.3 parts by mass of the crystal nucleating agent for a polylactic acid resin (compound 13) was added per 100 parts by mass of the polylactic acid resin (TE-2000, manufactured by Unitika Ltd.).

The crystallization temperature of the polylactic acid resin composition was evaluated by the above-described method.

### <Preparation of polylactic acid resin molded article>

A polylactic acid resin molded article was prepared as in Example 1 except for using the polylactic acid resin composition. The heat resistance and the appearance of the molded article were evaluated by the above-described methods.

Tables 1 to 3 show the evaluation results of the examples and comparative examples.

In Tables 1 to 3, the "crystal nucleating agent for a polylactic acid resin" is simply abbreviated as "crystal nucleating agent"; the "molar ratio of a cis isomer in stereoisomers of the alkyl substituent on the cyclohexane ring of the alicyclic dicarboxylic acid and an oxycarbonyl group constituting the metal salt" is simply abbreviated as "cis isomer molar ratio"; and the "amount of a crystal nucleating agent for a polylactic acid resin per 100 parts by mass of a polylactic acid resin" is simply abbreviated as "amount of crystal nucleating agent added".

**[Table 1]**

| | Crystal nucleating agent | Alicyclic dicarboxylic acid | Metal salt | Molar ratio of cis isomer (%) | Amount of crystal nucleating agent added (parts by mass) | Crystallization temperature (°C) | | Heat resistance (MPa) | | Appearance evaluation |
|---|---|---|---|---|---|---|---|---|---|---|
| | | | | | | Value | Evaluation | Value | Evaluation | |
| Example 1 | Compound 1 | 4-Methylcyclohexane-1,2-dicarboxylic acid | Calcium salt | 99.5 | 0.03 | 126.4 | ○ | 130 | ○ | ○ |
| Example 2 | Compound 1 | | | 99.5 | 0.05 | 127.7 | ○ | 155 | ○ | ○ |
| Example 3 | Compound 1 | | | 99.5 | 0.1 | 129.4 | ○○ | 175 | ○ | ○ |
| Example 4 | Compound 1 | | | 99.5 | 0.2 | 130.4 | ○○ | 412 | ○○ | ○ |
| Example 5 | Compound 1 | | | 99.5 | 0.3 | 131.6 | ○○ | 429 | ○○ | ○ |
| Example 6 | Compound 1 | | | 99.5 | 0.5 | 132.4 | ○○ | 486 | ○○ | ○ |
| Example 7 | Compound 1 | | | 99.5 | 1 | 134.7 | ○○ | 387 | ○○ | ○ |

**[Table 2]**

| | Crystal nucleating agent | Alicyclic dicarboxylic acid | Metal salt | Cis isomer molar ratio (%) | Amount of crystal nucleating agent added (parts by mass) | Crystallization temperature (°C) | | Heat resistance (MPa) | | Appearance evaluation |
|---|---|---|---|---|---|---|---|---|---|---|
| | | | | | | Value | Evaluation | Value | Evaluation | |
| Example 8 | Compound 1 | 4-Mmethylcyclohexane-1,2-dicarboxylic acid | Calcium salt | 99.5 | 5 | 137.8 | ○○ | 401 | ○○ | ○ |
| Example 9 | Compound 1 | | | 99.5 | 10 | 139.5 | ○○ | 424 | ○○ | ○ |
| Example 10 | Compound 1 | | | 99.5 | 12 | 139.8 | ○○ | 420 | ○○ | × |
| Example 11 | Compound 2 | | | 95.0 | 0.3 | 130.1 | ○○ | 383 | ○○ | ○ |
| Example 12 | Compound 3 | | | 93.0 | 0.3 | 129.5 | ○○ | 203 | ○○ | ○ |
| Example 13 | Compound 4 | | | 90.0 | 0.3 | 129.0 | ○○ | 201 | ○○ | ○ |
| Example 14 | Compound 5 | | | 83.0 | 0.3 | 127.3 | ○ | 102 | ○ | ○ |
| Example 15 | Compound 1 | | | 99.5 | 0.3 | 130.4 | ○○ | 381 | ○○ | ○ |

**[Table 3]**

| | Crystal nucleating agent | Alicyclic dicarboxylic acid | Metal salt | Cis isomer molar ratio (%) | Amount of crystal nucleating agent added (parts by mass) | Crystallization temperature (°C) | | Heat resistance (MPa) | | Appearance evaluation |
|---|---|---|---|---|---|---|---|---|---|---|
| | | | | | | Value | Evaluation | Value | Evaluation | |
| Comparative Example 1 | None | - | - | - | - | Not crystallized | × | 6 | × | ○ |
| Comparative Example 2 | Compound 6 | 4-Methylcyclohexane-1,2-dicarboxylic acid | Calcium salt | 75.0 | 0.3 | 124.9 | Δ | 7 | × | ○ |
| Comparative Example 3 | Compound 7 | | | 70.0 | 0.3 | 123.2 | Δ | 6 | × | ○ |
| Comparative Example 4 | Compound 8 | | | 50.0 | 0.3 | 118.3 | × | 6 | × | ○ |
| Comparative Example 5 | Talc | - | - | - | 1 | 105.1 | × | 4 | × | ○ |
| Comparative Example 6 | N,N',N"-tricyclohexyltrimesamide | - | - | - | 0.2 | 125.7 | Δ | 60 | Δ | ○ |
| Comparative Example 7 | | - | - | - | 0.03 | Not crystallized | × | 6 | × | ○ |
| Comparative Example 8 | Compound 9 | Cyclohexane-1,2-dicarboxylic acid | Calcium salt | - | 0.3 | 105.3 | × | 4 | × | ○ |
| Comparative Example 9 | Compound 10 | 4-Cyclohexene-1,2-dicarboxylic acid | | - | 0.3 | 107.9 | × | 4 | × | ○ |
| Comparative Example 10 | Compound 11 | 4-Methyl-4-cyclohexene-1,2-dicarboxylic acid | | - | 0.3 | 92.5 | × | 3 | × | ○ |
| Comparative Example 11 | Compound 12 | 1-Cyclohexene-1,2-dicarboxylic acid | | - | 0.3 | 93.0 | × | 3 | × | ○ |
| Comparative Example 12 | Compound 13 | 3-Methyl-4-cyclohexene-1,2-dicarboxylic acid | | - | 0.3 | 99.4 | × | 3 | × | ○ |

The results of the examples demonstrate that the use of the crystal nucleating agent for a polylactic acid resin of the present invention for a polylactic acid resin can improve the crystallization temperature of the polylactic acid resin composition and the heat resistance of the polylactic acid resin molded article.

The results of Examples 5 and 11 to 14 demonstrate that the higher the molar ratio of the cis isomer of the crystal nucleating agent for a polylactic acid resin is, the more the crystallization temperature of the polylactic acid resin composition and the heat resistance of the polylactic acid resin molded article can be improved.

Further, the results of Examples 1 to 10 demonstrate that the heat resistance of the polylactic acid resin molded article can be significantly improved when 0.2 parts by mass or more of the crystal nucleating agent for a polylactic acid resin is added per 100 parts by mass of the polylactic acid resin.

In contrast, when the crystal nucleating agents in the comparative examples were used for a polylactic acid resin, the crystal nucleating agents could not sufficiently improve the crystallization temperatures of the polylactic acid resin compositions and the heat resistance of the polylactic acid resin molded articles.

### INDUSTRIAL APPLICABILITY

The present invention provides a dispersion-type crystal nucleating agent for a polylactic acid resin which, when used for a polylactic acid resin, can improve the crystallization temperature of a polylactic acid resin composition and the heat resistance of a polylactic acid resin molded article.

The present invention also provides a polylactic acid resin composition and a polylactic acid resin molded article each containing the crystal nucleating agent for a polylactic acid resin.

The polylactic acid resin molded article of the present invention excels in heat resistance and is thus applicable to products to be used at high temperatures.

## Claims

1. A crystal nucleating agent for a polylactic acid resin, comprising a metal salt of an alicyclic dicarboxylic acid,
the alicyclic dicarboxylic acid being cyclohexane-1,2-dicarboxylic acid having at least one alkyl substituent directly bound to a cyclohexane ring,
the metal salt being a calcium salt, a hydroxy aluminum salt, a disodium salt, or a dilithium salt,
stereoisomers of the alkyl substituent on the cyclohexane ring of the alicyclic dicarboxylic acid and an oxycarbonyl group constituting the metal salt including a cis isomer at a molar ratio of 80.0% or more.

2. The crystal nucleating agent for a polylactic acid resin according to claim 1,
wherein the alkyl substituent is a C1-C4 linear or branched alkyl group.

3. The crystal nucleating agent for a polylactic acid resin according to claim 2,
wherein the alkyl substituent is a methyl group or a tert-butyl group.

4. The crystal nucleating agent for a polylactic acid resin according to claim 1 or 2,
wherein the alkyl substituent is located at a 3-position or a 4-position of the cyclohexane ring.

5. The crystal nucleating agent for a polylactic acid resin according to claim 1 or 2,
wherein the metal salt is a calcium salt or a disodium salt.

6. The crystal nucleating agent for a polylactic acid resin according to claim 1 or 2,
wherein the stereoisomers of the alkyl substituent on the cyclohexane ring of the alicyclic dicarboxylic acid and an oxycarbonyl group constituting the metal salt include a cis isomer at a molar ratio of 90.0% or more.

7. A polylactic acid resin composition, comprising
the crystal nucleating agent for a polylactic acid resin according to claim 1 or 2,
and
a polylactic acid resin.

8. The polylactic acid resin composition according to claim 7, containing the crystal nucleating agent for a polylactic acid resin in an amount of 0.03 to 10 parts by mass per 100 parts by mass of the polylactic acid resin.

9. A polylactic acid resin molded article comprising the polylactic acid resin composition according to claim 7.
